# EUROPÄISCHE PATENTANMELDUNG

(11) **EP 4 410 695 A1**
(43) Veröffentlichungstag der Anmeldung: **07.08.2024**
(21) Anmeldenummer: 24150293.9
(22) Anmeldetag: 04.01.2024
(51) Int. Cl.: B65D 1/02, B65D 39/00, B65D 65/46, B65D 41/10, B65D 41/12, D21J 3/10, D21J 7/00

(54) **BEHÄLTER MIT EINEM FASERN UMFASSENDEN, EINTEILIGEN BEHÄLTERKÖRPER UND EINEM VERSCHLUSS DAFÜR, VERFAHREN ZUM HERSTELLEN EINES BEHÄLTERKÖRPERS, VORRICHTUNG UND VERFAHREN ZUM VERSCHLIESSEN EINES BEHÄLTERKÖRPERS MITTELS EINES VERSCHLUSSES**

(30) Priorität: 24.01.2023 DE 102023101647
(71) Anmelder: Krones AG, 93073 Neutraubling (DE)
(72) Erfinder: LAPPE, Ulrich, 93073 Neutraubling (DE); SENN, Konrad, 93073 Neutraubling (DE); WEIN, Barbara, 93073 Neutraubling (DE); WINZINGER, Frank, 93073 Neutraubling (DE); GROSSER, Angelika, 93073 Neutraubling (DE); ZACHARIAS, Dr. Joerg, 93073 Neutraubling (DE)
(74) Vertreter: Grünecker Patent- und Rechtsanwälte PartG mbB

(57) **Zusammenfassung**

Die Erfindung betrifft einen Behälter mit einem Fasern umfassenden, einteiligen Behälterkörper mit einer Mündungsöffnung (16) und einem Verschluss (1, 2, 5, 6, 7, 8, 9, 10, 12) für den Behälterkörper. Der Verschluss ist zumindest teilweise in die Mündungsöffnung in eine Verschlussposition eingebracht, wobei der Verschluss in Zusammenwirken mit einer Innenfläche (19) der Mündungsöffnung zumindest teilweise kraftschlüssig in der Mündungsöffnung positioniert und dadurch der Behälterkörper verschlossen ist. Der Verschluss ist weiter ausgebildet, aus der Verschlussposition in eine Öffnungsposition ganz außerhalb des Behälterkörpers verbracht zu werden. Weiter betrifft die Erfindung ein Verfahren zum Herstellen eines Behälterkörpers zum Verwenden für den Behälter, ein Verfahren zum Herstellen eines Verschlusses zum Verwenden für den Behälter, eine Vorrichtung zum Verschließen eines Behälterkörpers mittels eines Verschlusses und ein Verfahren zum Verschließen eines Behälterkörpers mittels eines Verschlusses mittels der Vorrichtung.

## Beschreibung

Die Erfindung betrifft einen Behälter mit einem Fasern umfassenden, einteiligen Behälterkörper mit einer Mündungsöffnung und einem Verschluss für den Behälterkörper, ein Verfahren zum Herstellen eines Behälterkörpers zum Verwenden für den Behälter, ein Verfahren zum Verschlie-ßen eines Behälterkörpers mittels eines Verschlusses, eine Vorrichtung zum Verschließen eines Behälterkörpers mittels eines Verschlusses, ein Verfahren zum Verschließen eines Behälterkörpers mittels eines Verschlusses, einen Verschluss und ein System zum Herstellen eines verschlossenen Fasern umfassenden Behälters gemäß den unabhängigen Ansprüchen.

### Stand der Technik

Es ist bekannt, Fasern umfassende Behälter mit einem Kunststoffgewinde und Kunststoffdeckeln auszustatten, um eine Wiederverschließbarkeit eines solchen Behälters gewährleisten zu können. Eine Wiederverschließbarkeit von Behältern kann insbesondere bei Füllmengen von mehr als 200 ml wünschenswert sein, da diese Menge im Allgemeinen nicht in einem Zug ausgetrunken wird. Aufgrund der unterschiedlichen Materialien ist der Behälter nicht kompostierbar und auch nur schwer recyclebar.

### Aufgabe

Die Aufgabe der Erfindung ist es, einen Behälter mit einem Fasern umfassenden, einteiligen Behälterkörper mit einer Mündungsöffnung und einem Verschluss für den Behälterkörper, ein Verfahren zum Herstellen eines Behälterkörpers zum Verwenden für den Behälter, ein Verfahren zum Verschließen eines Behälterkörpers mittels eines Verschlusses und ein Verfahren zum Verschließen eines Behälterkörpers mittels eines Verschlusses zur Verfügung zu stellen, die eine Verschließbarkeit und Wiederverschließbarkeit eines Fasern umfassenden Behälters ohne das Vorsehen eines Gewindes ermöglichen können.

### Lösung

Die Aufgabe wird gelöst durch den Behälter mit einem Fasern umfassenden, einteiligen Behälterkörper mit einer Mündungsöffnung und einem Verschluss für den Behälterkörper, das Verfahren zum Herstellen eines Behälterkörpers zum Verwenden für den Behälter, das Verfahren zum Verschließen eines Behälterkörpers mittels eines Verschlusses, eine Vorrichtung zum Verschlie-ßen eines Behälterkörpers mittels eines Verschlusses, das Verfahren zum Verschließen eines Behälterkörpers mittels eines Verschlusses, den Verschluss und das System zum Herstellen eines verschlossenen Fasern umfassenden Behälters gemäß den unabhängigen Ansprüchen. Weitere Ausführungsformen sind in den Unteransprüchen offenbart.

Der erfindungsgemäße Behälter mit einem Fasern umfassenden, einteiligen Behälterkörper mit einer Mündungsöffnung und einem Verschluss für den Behälterkörper, wobei der Verschluss zumindest teilweise in die Mündungsöffnung in eine Verschlussposition eingebracht ist, wobei der Verschluss in Zusammenwirken mit einer Innenfläche der Mündungsöffnung zumindest teilweise kraftschlüssig in der Mündungsöffnung positioniert ist und dadurch der Behälterkörper verschlossen ist, wobei der Verschluss weiter ausgebildet ist, aus der Verschlussposition in eine Öffnungsposition ganz außerhalb des Behälterkörpers verbracht zu werden.

Da der Verschluss in Zusammenwirken mit einer Innenfläche der Mündungsöffnung zumindest teilweise kraftschlüssig in der Mündungsöffnung positioniert ist und dadurch der Behälterkörper verschlossen ist, kann auf ein Gewinde am Behälterkörper verzichtet werden, ebenso wie auf einen Schraubverschluss zum Aufschrauben auf das Gewinde. Im Gegensatz zu herkömmlichen Drehverschlüssen kann die Dichtfläche viel größer und damit eine Abdichtung einfacher zu realisieren sein.

Die in der Anmeldung beschriebenen Verschlüsse können aus Vollmaterial bestehen oder einen oder mehrere Hohlräume umfassen.

Der Fasern umfassenden, einteilige Behälterkörper mit der Mündungsöffnung und der Verschluss können mit einfachen geometrischen Ausformung der äußeren Oberflächen hergestellt werden.

Die Fasern können Lignin, Bananenblätter und/oder Chinin umfassen. Die Fasern können beispielsweise Zellulosefasern, Fasern von Nadelhölzern, Blattgehölzen und/oder Platanen und/oder von Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen.

Die Fasern können Fasermischungen aus holzfremden Material, beispielsweise Baumwolle, Hanf, und/oder Textilfasern umfassen.

Beispielsweise können die Fasern Viskosefasern umfassen. Eine Viskosefaser ist eine künstliche Faser aus regenerierter Zellulose, wobei die Viskosefasern als Ausgangsbasis 100% Zellulose haben, die in einem mehrstufigen Verfahren behandelt wird. Die Viskosefasern können eine flache oder kabelförmige Struktur, eine trilobale Form oder eine doppelt trilobale Struktur umfassen. Die Fasern können eine flächige oder hohle Struktur oder eine geriffelte oder raue äußere Oberfläche umfassen.

Es können auch verschiedenartige Fasern in Kombination verwendet werden. Beispielsweise können Fasern mit unterschiedlichen äußeren Oberflächen und/oder Formen und/oder hohler Struktur und/oder flächiger Struktur und/oder verschiedenen Längenverteilungen und/oder aus verschiedenen Materialien kombiniert werden.

Durch den natürlichen Ursprung der Fasern können diese biologisch abbaubar sein. Zudem sind sie nachhaltig und nachwachsend.

Die Fasern können in einer Pulpe verwendet werden. Die Pulpe kann eine Mischung aus Wasser, beispielsweise mit Additiven, und Fasern sein oder umfassen.

Der einteilige Behälterkörper kann eine Flasche, ein Fass oder eine Dose sein.

Das Ausformen des Fasern umfassenden, einteiligen Behälterkörpers unter Verwendung der faserhaltigen Pulpe kann in einer Form erfolgen, die eine Negativform einer Außenkontur des herzustellenden Behälterkörpers darstellen kann, oder mittels eine Spritzgussverfahrens.

Die faserhaltige Pulpe, die zum Ausformen des Fasern umfassenden, einteiligen Behälterkörpers, verwendet wird und die faserhaltige Pulpe, die zum Ausformen eines Verschlusses verwendet werden kann, können gleich oder verschieden sein. Wenn diese gleich sind, können diese von derselben Quelle entnommen werden, beispielsweise einem Pulpemischgefäß.

Der Verschluss kann in Form eines kreiszylindrischen Stopfens ausgebildet sein.

Der Stopfen kann einen Durchmesser und eine Höhe aufweisen, die derart bemessen sein können, dass der Stopfen zumindest teilweise in die Mündungsöffnung des Fasern umfassenden, einteiligen Behälterkörpers in eine Verschlussposition einbringbar sein kann. Beispielsweise kann ein Durchmesser der Mündungsöffnung gleich groß wie der Durchmesser des Stopfens sein. Der Stopfen kann zumindest teilweise elastisch sein und/oder mit einem gewissen Druck in die Mündungsöffnung eingebracht werden, oder ein Durchmesser der Mündungsöffnung kann minimal größer sein als der Durchmesser des Stopfens.

Der Stopfen kann in einem ersten Bereich einen ersten Durchmesser und in einem zweiten Bereich einen zweiten Durchmesser umfassen. Beispielsweise kann der erste Durchmesser derart bemessen sein, dass in Zusammenwirken mit der Innenfläche der Mündungsöffnung der Stopfen mit diesem ersten Bereich kraftschlüssig in der Mündungsöffnung positioniert sein kann. Beispielsweise kann der zweite Durchmesser größer als der erste Durchmesser sein.

Der erste Durchmesser kann, wie bereits zuvor beschrieben, derart bemessen ist, dass in Zusammenwirken mit der Innenfläche der Mündungsöffnung der Stopfen mit einem ersten Kreiszylinder, der den ersten Durchmesser aufweist, kraftschlüssig in der Mündungsöffnung positioniert werden kann. Der zweite Durchmesser kann größer als der erste Durchmesser sein, sodass ein zweiter Kreiszylinder, der den zweiten Durchmesser aufweist, nicht in die Mündungsöffnung einbringbar sein kann. Der zweite Kreiszylinder kann als Griffelement für ein Verbringen des Stopfens aus der Verschlussposition in eine Öffnungsposition dienen.

Der Verschluss kann in Form eines Kreiskegels ausgebildet sein. Beispielsweise kann der Kreiskegel ein abgeschnittener Kreiskegel sein. Beispielsweise kann ein maximaler Durchmesser des Kreiskegels derart bemessen sein, dass in Zusammenwirken mit der Innenfläche der Mündungsöffnung der Verschluss kraftschlüssig in der Mündungsöffnung positioniert sein kann.

Der Kreiskegel kann einen Durchmesser (der maximale Durchmesser des Kreiskegels) und eine Höhe aufweisen, die derart bemessen sein können, dass der Kreiskegel zumindest teilweise in die Mündungsöffnung des Fasern umfassenden, einteiligen Behälterkörpers in die Verschlussposition einbringbar ist. Beispielsweise kann ein Durchmesser der Mündungsöffnung gleich groß wie der Durchmesser des Kreiskegels, und der Kreiskegel kann zumindest teilweise elastisch sein und/oder mit einem gewissen Druck in die Mündungsöffnung eingebracht werden, oder ein Durchmesser der Mündungsöffnung kann minimal größer sein als der Durchmesser des Kreiskegels.

Der Kreiskegel kann ein gerader oder ein schiefer Kreiskegel sein.

Der Kreiskegel kann weiter einen Kreiszylinder umfassen. Beispielsweise können ein maximaler Durchmesser des Kreiskegels und ein Durchmesser des Kreiszylinders gleich groß sein. Beispielsweise kann der Durchmesser derart bemessen sein, dass in Zusammenwirken mit der Innenfläche der Mündungsöffnung der Verschluss kraftschlüssig in der Mündungsöffnung positioniert sein kann.

Der Kreiskegel und der Kreiszylinder können dann beide in Zusammenwirken mit der Innenfläche der Mündungsöffnung den Verschluss kraftschlüssig in der Mündungsöffnung positionieren und dadurch den Behälterkörper in der Verschlussposition verschließen.

Der Kreiskegel kann einen ersten und einen zweiten Kreiszylinder umfassen. Beispielsweise können ein maximaler Durchmesser des Kreiskegels und ein Durchmesser des ersten Kreiszylinders gleich groß sein und ein Durchmesser des zweiten Kreiszylinders kann größer als der maximale Durchmesser des Kreiskegels sein. Beispielsweise kann der maximale Durchmesser derart bemessen sein, dass in Zusammenwirken mit der Innenfläche der Mündungsöffnung der Verschluss kraftschlüssig in der Mündungsöffnung positioniert sein kann.

Für den Kreiskegel und den ersten Kreiszylinder können die bereits zuvor angegebenen Merkmale gelten. Der Durchmesser des zweiten Kreiszylinders kann größer als der Durchmesser des Kreiskegels sein, sodass der zweite Kreiszylinder nicht in die Mündungsöffnung einbringbar sein kann. Der zweite Kreiszylinder kann als Griffelement für ein Verbringen des Verschlusses aus einer Verschlussposition in eine Öffnungsposition dienen.

Der Verschluss kann in Form eines Kreiskegels ausgebildet sein, der eine umgeknickte Spitze umfassen kann.

Der Verschluss kann in Form eines umgedrehten Kronkorkens ausgebildet sein.

Der Kronkorken kann einen ersten Durchmesser in einem Deckelbereich und einen zweiten Durchmesser in einem Fältelungsbereich bei einer Höhe aufweisen. Der erste Durchmesser kann kleiner als der zweite Durchmesser sein. Der zweite Durchmesser und die Höhe können derart bemessen sein, dass der Verschluss zumindest teilweise in die Mündungsöffnung des Fasern umfassenden, einteiligen Behälterkörpers in eine Verschlussposition einbringbar sein kann. Beispielsweise kann ein Durchmesser der Mündungsöffnung gleich groß wie der zweite Durchmesser des Verschlusses sein, sodass der Verschluss in Zusammenwirken mit der Innenfläche der Mündungsöffnung zumindest teilweise kraftschlüssig in der Mündungsöffnung positioniert werden und dadurch den Behälterkörper verschließen kann.

Zumindest solche Oberflächen des Verschlusses, die mit einem im Behälter vorhandenen Produkt in Kontakt kommbar sind, können eine Beschichtung umfassen. Beispielsweise kann die Beschichtung lebensmittelecht und/oder biologisch abbaubar und/oder kompostierbar und/oder flüssigkeitsresistent sein. Der Verschluss kann eine Beschichtung mit Wachs umfassen.

Der Verschluss kann eine Verliersicherung umfassen, die ihn verliersicher mit dem Behälterkörper verbinden kann. Beispielsweise kann die Verliersicherung ein biologisch abbaubares und/oder kompostierbares Material umfassen.

Der Verschluss kann Fasern umfassen, beispielsweise Holz- und/oder Zellstofffasern, Fasern aus Papier oder Pappe. Für die Fasern können auch die bereits weiter oben gemachten Aussagen gelten.

Der Verschluss kann ein korkhaltiges Material umfassen.

Beispielsweise kann ein Verschluss, beispielsweise für einen flaschenförmigen Behälter, eine Höhe im Bereich von 2 cm bis 7 cm und einen Durchmesser im Bereich von 1 cm bis 3 cm aufweisen.

Ein Verfahren zum Herstellen eines Behälterkörpers zum Verwenden für den Behälter, wie oben oder weiter unten beschrieben, ist vorgesehen.

Der Behälterkörper kann einteilig hergestellt werden, beispielsweise kann eine faserhaltige Pulpe verwendet werden. Es kann eine Form, die eine Negativform einer Außenkontur des herzustellenden Behälterkörpers darstellen, verwendet werden. Oder der Behälterkörper kann mittels eines Spritzgussverfahrens hergestellt werden. Für die Fasern der faserhaltigen Pulpe können die bereits weiter oben beschriebenen Merkmale gelten.

Ein Verfahren zum Herstellen eines Verschlusses zum Verwenden für den Behälter, wie oben oder weiter unten beschrieben, ist vorgesehen.

Der Verschluss kann beispielsweise unter Verwendung einerfaserhaltigen Pulpe hergestellt werden, es können aber auch andere Materialien, wie beispielsweise ein korkhaltiges Material. Die Fasern können Holz- und/oder Zellstofffasern, und/oder Fasern aus Papier oder Pappe umfassen. Zudem können für die Fasern die bereits weiter oben beschriebenen Merkmale gelten. Für die Herstellung des Verschlusses kann eine Form verwendet werden, die eine Negativform einer Außenkontur des herzustellenden Verschlusses darstellt. Oder der Verschluss kann mittels eines Spritzgussverfahrens hergestellt werden.

Eine Vorrichtung zum Verschließen eines Behälterkörpers, der gemäß dem Verfahren zum Herstellen eines Behälterkörpers zum Verwenden für den Behälter, wie oben oder weiter unten beschrieben, hergestellt wurde mittels eines Verschlusses, der gemäß dem Verfahren zum Herstellen eines Verschlusses zum Verwenden für den Behälter, wie oben oder weiter unten beschrieben, hergestellt wurde, ist vorgesehen.

Zudem ist ein Verfahren vorgesehen zum Verschließen eines Behälterkörpers, der gemäß dem Verfahren zum Herstellen eines Behälterkörpers zum Verwenden für den Behälter, wie oben oder weiter unten beschrieben, hergestellt wurde mittels eines Verschlusses, der gemäß dem Verfahren zum Herstellen eines Verschlusses zum Verwenden für den Behälter, wie oben oder weiter unten beschriebe, hergestellt wurde mittels der Vorrichtung zum Verschließen des Behälterkörpers mittels des Verschlusses.

Weiter ist eine Vorrichtung zum Verschließen eines Fasern umfassenden, einteiligen Behälterkörpers mittels eines Verschlusses vorgesehen, wobei beispielweise der Verschluss in einer Verschlussposition in Zusammenwirken mit einer Innenfläche einer Mündungsöffnung des Behälterkörpers zumindest teilweise kraftschlüssig in der Mündungsöffnung positioniert ist und dadurch der Behälterkörper verschlossen ist.

Weiter ist ein Verfahren vorgesehen zum Verschließen eines Fasern umfassenden, einteiligen Behälterkörpers mittels eines Verschlusses mittels der (beispielsweise im vorherigen Abschnitt erwähnten) Vorrichtung zum Verschließen des Behälterkörpers mittels des Verschlusses. Beispielweise ist der Verschluss in einer Verschlussposition in Zusammenwirken mit einer Innenfläche einer Mündungsöffnung des Behälterkörpers zumindest teilweise kraftschlüssig in der Mündungsöffnung positionierbar und dadurch der Behälterkörper verschließbar.

Zudem ist ein Verschluss vorgesehen, der zumindest teilweise in eine Mündungsöffnung eines Behälters in eine Verschlussposition eingebringbar ist, wobei der Verschluss in Zusammenwirken mit einer Innenfläche der Mündungsöffnung zumindest teilweise kraftschlüssig in der Mündungsöffnung positionierbar ist und dadurch der Behälterkörper verschließbar ist, wobei der Verschluss weiter ausgebildet ist, aus der Verschlussposition in eine Öffnungsposition ganz außerhalb des Behälterkörpers verbracht zu werden, wobei der Verschluss ein faserhaltiges Material umfasst.

Zudem ist ein System zum Herstellen eines verschlossenen faserhaltigen Behälters vorgesehen, umfassend eine Vorrichtung zur Herstellung eines Behälters aus faserhaltigem Material, eine Vorrichtung zur Herstellung eines Verschlusses aus faserhaltigem Material, und eine Vorrichtung zum Verschließen des Behälters, sowie eine Transporteinrichtung zum Transportieren der Behälter und der Verschlüsse an eine Position, an der die Behälter mit den Verschlüssen verschlossen werden.

Bei der Transportvorrichtung kann es sich um Transportsterne handeln, welche die Behälter, die Verschlüsse und/oder die verschlossenen Behälter zumindest bereichsweise entlang eines mäanderförmigen Transportpfads transportieren.

Der Verschluss kann mittels eines Werkzeugs im Verschließer vor dem Einbringen in die Behältermündung leicht zusammengedrückt werden, so dass er im Durchmesser reduziert ist.

Ebenfalls ist an eine drahtförmige Verschlusssicherung gedacht, die nach dem Verschließen des Behälters auf den Verschluss und den Behälter aufgebracht werden kann. Insbesondere kann diese an einem Bereich des Behälters mit geringerem Durchmesser als der ihn umgebende Bereich hin zur Behältermündung angeordnet und insbesondere derart festgezogen werden, dass sie den Behälter in diesem Bereich umschnürt.

Anstatt aus Pulpe kann der Behälter und/oder der Verschluss alternativ aus trockenen Fasern hergestellt werden / sein.

Sämtliche Aspekte der Verfahren, Behälter, Verschlüsse und Vorrichtungen können, sofern sie sich nicht ausschließen, miteinander verwendet bzw. kombiniert werden.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine erste Ausführungsform eines Verschlusses,
Figur 2 eine zweite Ausführungsform eines Verschlusses,
Figur 3 eine dritte Ausführungsform eines Verschlusses,
Figur 4 eine vierte Ausführungsform eines Verschlusses,
Figur 5 eine fünfte Ausführungsform eines Verschlusses,
Figur 6 eine sechste Ausführungsform eines Verschlusses,
Figur 7 eine siebte Ausführungsform eines Verschlusses,
Figur 8 eine achte Ausführungsform eines Verschlusses,
Figur 9 eine neunte Ausführungsform eines Verschlusses,
Figur 10 einen Verschluss in einer Öffnungsposition und
Figur 11 einen Verschluss in einer Verschlussposition.

### Ausführliche Figurenbeschreibung

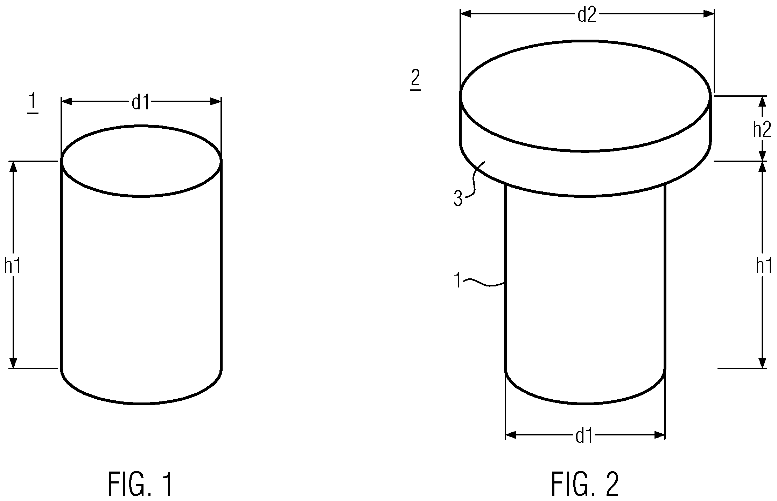

Die Figur 1 zeigt eine erste Ausführungsform eines Verschlusses 1, der in Form eines kreiszylindrischen Stopfens 1 ausgebildet ist. Der Stopfen 1 weist einen Durchmesser d1 und eine Höhe h1 auf, die derart bemessen sein können, dass der Stopfen 1 zumindest teilweise in eine Mündungsöffnung eines Fasern umfassenden, einteiligen Behälterkörpers in eine Verschlussposition einbringbar ist. Beispielsweise ist ein Durchmesser der Mündungsöffnung gleich groß wie der Durchmesser d1 des Stopfens 1 und der Stopfen 1 kann zumindest teilweise elastisch sein und/oder mit einem gewissen Druck in die Mündungsöffnung eingebracht werden, oder ein Durchmesser der Mündungsöffnung kann minimal größer sein als der Durchmesser d1 des Stopfens 1.

Der Stopfen 1 kann in Zusammenwirken mit einer Innenfläche der Mündungsöffnung zumindest teilweise kraftschlüssig in der Mündungsöffnung positioniert werden und dadurch den Behälterkörper verschließen.

Die Figur 2 zeigt eine zweite Ausführungsform eines Verschlusses 2, der als Stopfen 2 mit einem ersten Kreiszylinder 1 mit einem ersten Durchmesser d1 und mit einem zweiten Kreiszylinder 3 mit einen zweiten Durchmesser d2 ausgebildet ist. Der erste Durchmesser d1 ist, wie bereits in der Figur 1 beschrieben, derart bemessen ist, dass in Zusammenwirken mit einer Innenfläche einer Mündungsöffnung der Stopfen 2 mit dem ersten Kreiszylinder 1 kraftschlüssig in der Mündungsöffnung positioniert werden kann. Der zweite Durchmesser d2 ist größer als der erste Durchmesser d1, sodass der zweite Kreiszylinder 3 nicht in die Mündungsöffnung einbringbar ist. Der zweite Kreiszylinder 3 kann als Griffelement für ein Verbringen des Stopfens 2 aus einer Verschlussposition in eine Öffnungsposition dienen.

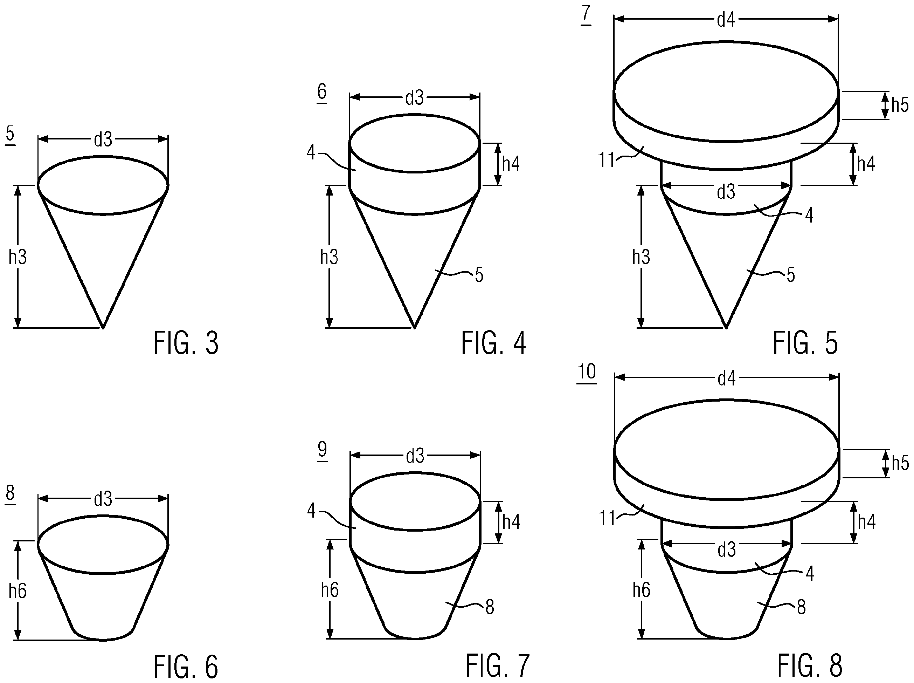

Die Figur 3 zeigt eine dritte Ausführungsform eines Verschlusses 5, der in Form eines Kreiskegels 5 ausgebildet ist. In der Darstellung ist es ein gerader Kreiskegel 5, es kann aber stattdessen auch ein schiefer Kreiskegel vorgesehen sein. Der Kreiskegel 5 weist einen Durchmesser d3 (der maximale Durchmesser des Kreiskegels 5) und eine Höhe h3 auf, die derart bemessen sein können, dass der Kreiskegel 5 zumindest teilweise in eine Mündungsöffnung eines Fasern umfassenden, einteiligen Behälterkörpers in eine Verschlussposition einbringbar ist. Beispielsweise ist ein Durchmesser der Mündungsöffnung etwas kleiner oder gleich groß wie der Durchmesser d3 des Kreiskegels 5 und der Kreiskegel 5 kann zumindest teilweise elastisch sein und/oder mit einem gewissen Druck in die Mündungsöffnung eingebracht werden, oder ein Durchmesser der Mündungsöffnung kann minimal größer sein als der Durchmesser d3 des Kreiskegels 5.

Der Kreiskegel 5 kann in Zusammenwirken mit einer Innenfläche der Mündungsöffnung zumindest teilweise kraftschlüssig in der Mündungsöffnung positioniert werden und dadurch den Behälterkörper verschließen.

Die Figur 4 zeigt eine vierte Ausführungsform eines Verschlusses 6, der den Kreiskegel 5 und einen Kreiszylinder 4 mit dem Durchmesser d3 und einer Höhe h4 umfasst. Der Durchmesser d3 ist, wie bereits in der Figur 3 beschrieben, derart bemessen ist, dass in Zusammenwirken mit einer Innenfläche einer Mündungsöffnung der Verschluss 6 kraftschlüssig in der Mündungsöffnung positioniert werden kann und dadurch den Behälterkörper in der Verschlussposition verschließen kann.

Die Figur 5 zeigt eine fünfte Ausführungsform eines Verschlusses 7, der den Kreiskegel 5 und den Kreiszylinder 4 mit dem Durchmesser d3 und der Höhe h4 umfasst sowie einen weiteren Kreiszylinder 11 mit einem vierten Durchmesser d4 und einer fünften Höhe h5 umfasst. Der Durchmesser d4 des weiteren Kreiszylinders 11 ist größer als der Durchmesser d3, sodass der weitere Kreiszylinder 11 nicht in die Mündungsöffnung einbringbar ist. Der weitere Kreiszylinder 11 kann als Griffelement für ein Verbringen des Verschlusses 7 aus einer Verschlussposition in eine Öffnungsposition dienen. Der weitere Kreiszylinder 11 kann zumindest auf einem Teil des Mündungsbereichs aufliegen.

Die Figur 6 zeigt eine sechste Ausführungsform eines Verschlusses 8, der als ein abgeschnittener Kreiskegel 8 ausgebildet ist. In der Darstellung ist ein gerader, abgeschnittener Kreiskegel 8 gezeigt, es kann aber stattdessen auch ein schiefer, abgeschnittener Kreiskegel vorgesehen sein. Der abgeschnittene Kreiskegel 8 weist einen Durchmesser d3 (der maximale Durchmesser des abgeschnittenen Kreiskegels 8) und eine Höhe h6 auf, die derart bemessen sein können, dass der abgeschnittene Kreiskegel 8 zumindest teilweise in eine Mündungsöffnung eines Fasern umfassenden, einteiligen Behälterkörpers in eine Verschlussposition einbringbar ist. Beispielsweise ist ein Durchmesser der Mündungsöffnung gleich groß wie der Durchmesser d3 des abgeschnittenen Kreiskegels 8, und der abgeschnittene Kreiskegel 8 kann zumindest teilweise elastisch sein und/oder mit einem gewissen Druck in die Mündungsöffnung eingebracht werden, oder ein Durchmesser der Mündungsöffnung kann minimal größer sein als der Durchmesser d3 des abgeschnittenen Kreiskegels 8.

Der abgeschnittene Kreiskegel 8 kann in Zusammenwirken mit einer Innenfläche der Mündungsöffnung zumindest teilweise kraftschlüssig in der Mündungsöffnung positioniert werden und dadurch den Behälterkörper verschließen.

Die Figur 7 zeigt eine siebte Ausführungsform eines Verschlusses 9, der den abgeschnittenen Kreiskegel 8 und einen Kreiszylinder 4 mit dem Durchmesser d3 und einer Höhe h4 umfasst. Der Durchmesser d3 ist, wie bereits in der Figur 6 beschrieben, derart bemessen ist, dass in Zusammenwirken mit einer Innenfläche einer Mündungsöffnung der Verschluss 9 kraftschlüssig in der Mündungsöffnung positioniert werden kann und dadurch den Behälterkörper in der Verschlussposition verschließen kann.

Die Figur 8 zeigt eine achte Ausführungsform eines Verschlusses 10, der den abgeschnittenen Kreiskegel 8 und den Kreiszylinder 4 mit dem Durchmesser d3 und der Höhe h4 umfasst sowie einen weiteren Kreiszylinder 11 mit einem vierten Durchmesser d4 und einer fünften Höhe h5 umfasst. Der Durchmesser d4 des weiteren Kreiszylinders 11 ist größer als der Durchmesser d3, sodass der weitere Kreiszylinder 11 nicht in die Mündungsöffnung einbringbar ist. Der weitere Kreiszylinder 11 kann als Griffelement für ein Verbringen des Verschlusses 10 aus einer Verschlussposition in eine Öffnungsposition dienen. Der weitere Kreiszylinder 11 kann zumindest auf einem Teil des Mündungsbereichs aufliegen.

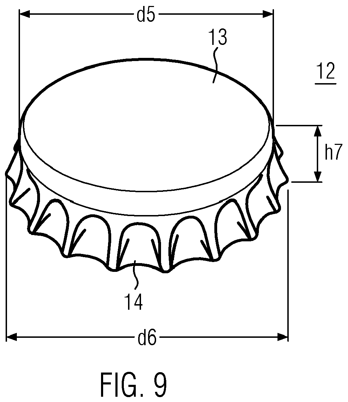

Die Figur 9 zeigt eine neunte Ausführungsform eines Verschlusses 12, der in Form eines umgedrehten Kronkorkens 12 ausgebildet ist. Der Kronkorken weist einen ersten Durchmesser d5 im Deckelbereich 13 und einen zweiten Durchmesser d6 in einem Fältelungsbereich 14 bei einer Höhe h7 auf. Die Höhe h7 kann 5 mm bis 20 mm betragen. Der erste Durchmesser d5 ist kleiner als der zweite Durchmesser d6. Der zweite Durchmesser d6 und die Höhe h7 können derart bemessen sein, dass der Verschluss 12 zumindest teilweise in eine Mündungsöffnung eines Fasern umfassenden, einteiligen Behälterkörpers in eine Verschlussposition einbringbar ist. Beispielsweise ist ein Durchmesser der Mündungsöffnung gleich groß wie der zweite Durchmesser d6 des Verschlusses 12, sodass der Verschluss 12 in Zusammenwirken mit einer Innenfläche der Mündungsöffnung zumindest teilweise kraftschlüssig in der Mündungsöffnung positioniert werden und dadurch den Behälterkörper verschließen kann.

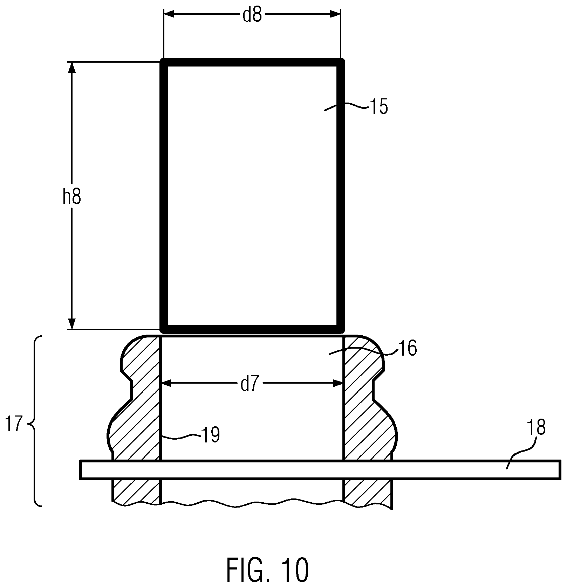

Die Figur 10 zeigt einen Verschluss 15 in einer Öffnungsposition. Der Verschluss 15 ist in Form eines kreiszylindrischen Stopfens 15 mit einem Durchmesser d8 und einer Höhe h8 ausgebildet und ist in der Darstellung ganz außerhalb eines Behälterkörpers angeordnet. Vom Behälterkörper ist ein Mündungsbereich 17, der eine Mündungsöffnung 16 mit einem Durchmesser d7 umgibt, zu erkennen. Der Mündungsbereich 17 hat in der Darstellung eine beispielhafte Form. Bei einer anderen Form kann beispielsweise die obere Welle nicht vorgesehen sein. Der Mündungsbereich 17 wird von einer Klammer 18 gehaltert, um für eine Stabilisierung beim Einbringen des Verschlusses 15 in die Mündungsöffnung 16 des Fasern umfassenden, einteiligen Behälterkörpers in eine Verschlussposition zu sorgen.

Der Durchmesser d8 und die Höhe h8 des Verschlusses 15 sind derart bemessen, dass der Verschluss 15 zumindest teilweise in die Mündungsöffnung 16 des Fasern umfassenden, einteiligen Behälterkörpers in eine Verschlussposition einbringbar ist und in Zusammenwirken mit einer Innenfläche 19 der Mündungsöffnung 16 zumindest teilweise kraftschlüssig in der Mündungsöffnung 16 positioniert werden und dadurch den Behälterkörper verschließen kann.

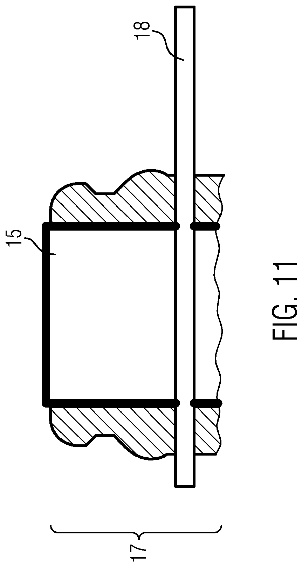

Die Figur 11 zeigt den Verschluss 15 in einer Verschlussposition, in der er in die Mündungsöffnung 16 des Fasern umfassenden, einteiligen eingebracht wurde. Der Verschluss 15 wird in Zusammenwirken mit der Innenfläche 19 der Mündungsöffnung 16 zumindest teilweise kraftschlüssig in der Mündungsöffnung 16 positioniert und verschließt dadurch den Behälterkörper. Der Mündungsbereich hat in der Darstellung eine beispielhafte Form. Bei einer anderen Form kann beispielsweise die obere Welle nicht vorgesehen sein.

## Patentansprüche

1. Behälter mit einem Fasern umfassenden, einteiligen Behälterkörper mit einer Mündungsöffnung (16) und einem Verschluss (1, 2, 5, 6, 7, 8, 9, 10, 12) für den Behälterkörper, wobei der Verschluss (1, 2, 5, 6, 7, 8, 9, 10, 12) zumindest teilweise in die Mündungsöffnung (16) in eine Verschlussposition eingebracht ist, wobei der Verschluss (1, 2, 5, 6, 7, 8, 9, 10, 12) in Zusammenwirken mit einer Innenfläche (19) der Mündungsöffnung (16) zumindest teilweise kraftschlüssig in der Mündungsöffnung (16) positioniert ist und dadurch der Behälterkörper verschlossen ist, wobei der Verschluss (1, 2, 5, 6, 7, 8, 9, 10, 12) weiter ausgebildet ist, aus der Verschlussposition in eine Öffnungsposition ganz außerhalb des Behälterkörpers verbracht zu werden.

2. Der Behälter nach Anspruch 1, wobei der Verschluss in Form eines kreiszylindrischen Stopfens (1, 2, 15) ausgebildet ist.

3. Der Behälter nach Anspruch 2, wobei der Stopfen (2) in einem ersten Bereich einen ersten Durchmesser (d1) und in einem zweiten Bereich einen zweiten Durchmesser (d2) umfasst,
wobei beispielsweise der erste Durchmesser (d1) derart bemessen ist, dass in Zusammenwirken mit der Innenfläche (19) der Mündungsöffnung (16) der Stopfen (2) mit diesem ersten Bereich kraftschlüssig in der Mündungsöffnung (16) positioniert ist,
wobei beispielsweise der zweite Durchmesser (d2) größer als der erste Durchmesser (d1) ist.

4. Der Behälter nach Anspruch 1, wobei der Verschluss in Form eines Kreiskegels (5, 8) ausgebildet ist, wobei beispielsweise der Kreiskegel ein abgeschnittener Kreiskegel (8) ist, wobei beispielsweise ein maximaler Durchmesser (d3) des Kreiskegels (5, 8) derart bemessen ist, dass in Zusammenwirken mit der Innenfläche (19) der Mündungsöffnung (16) der Verschluss kraftschlüssig in der Mündungsöffnung (16) positioniert ist.

5. Der Behälter nach Anspruch 4, wobei der Kreiskegel (6, 7, 9, 10) weiter einen Kreiszylinder (4, 11) umfasst, wobei beispielsweise ein maximaler Durchmesser (d3) des Kreiskegels (6, 7, 9, 10) und ein Durchmesser (d3) des Kreiszylinders (4) gleich groß sind, wobei beispielsweise der Durchmesser (d3) derart bemessen ist, dass in Zusammenwirken mit der Innenfläche (19) der Mündungsöffnung (16) der Verschluss (6, 7, 9, 10) kraftschlüssig in der Mündungsöffnung (16) positioniert ist.

6. Der Behälter nach Anspruch 4, wobei der Kreiskegel (7, 10) einen ersten und einen zweiten Kreiszylinder (4, 11) umfasst, wobei beispielsweise ein maximaler Durchmesser (d3) des Kreiskegels (7, 10) und ein Durchmesser (d3) des ersten Kreiszylinders (4) gleich groß sind und wobei ein Durchmesser (d4) des zweiten Kreiszylinders (11) größer als der maximale Durchmesser (d3) des Kreiskegels (7, 10) ist, wobei beispielsweise der maximale Durchmesser (d3) derart bemessen ist, dass in Zusammenwirken mit der Innenfläche (19) der Mündungsöffnung (16) der Verschluss (7, 10) kraftschlüssig in der Mündungsöffnung (16) positioniert ist.

7. Der Behälter nach Anspruch 1, wobei der Verschluss in Form eines Kreiskegels ausgebildet ist, der eine umgeknickte Spitze umfasst.

8. Der Behälter nach Anspruch 1, wobei der Verschluss in Form eines umgedrehten Kronkorkens (12) ausgebildet ist.

9. Der Behälter nach einem der Ansprüche 1 bis 8, wobei zumindest solche Oberflächen des Verschlusses, die mit einem im Behälter vorhandenen Produkt in Kontakt kommbar sind, eine Beschichtung umfassen, wobei beispielsweise die Beschichtung lebensmittelecht und/oder biologisch abbaubar und/oder kompostierbar und/oder flüssigkeitsresistent ist.

10. Der Behälter nach einem der Ansprüche 1 bis 9, wobei der Verschluss eine Verliersicherung umfasst, die ihn verliersicher mit dem Behälterkörper verbindet, wobei beispielsweise die Verliersicherung ein biologisch abbaubares und/oder kompostierbares Material umfasst.

11. Der Behälter nach einem der Ansprüche 1 bis 10, wobei der Verschluss Fasern umfasst, beispielsweise Holz- und/oder Zellstofffasern, Fasern aus Papier oder Pappe.

12. Der Behälter nach einem der Ansprüche 1 bis 11, wobei der Verschluss ein korkhaltiges Material umfasst.

13. Verfahren zum Herstellen eines Behälterkörpers zum Verwenden für den Behälter nach einem der Ansprüche 1 bis 12.

14. Verfahren zum Herstellen eines Verschlusses (1, 2, 5, 6, 7, 8, 9, 10, 12) zum Verwenden für den Behälter nach einem der Ansprüche 1 bis 12.

15. Vorrichtung zum Verschließen eines Behälterkörpers, der gemäß dem Verfahren nach Anspruch 13 hergestellt wurde mittels eines Verschlusses (1, 2, 5, 6, 7, 8, 9, 10, 12), der gemäß dem Verfahren nach Anspruch 14 hergestellt wurde.

16. Verfahren zum Verschließen eines Behälterkörpers, der gemäß dem Verfahren nach Anspruch 13 hergestellt wurde mittels eines Verschlusses (1, 2, 5, 6, 7, 8, 9, 10, 12), der gemäß dem Verfahren nach Anspruch 14 hergestellt wurde mittels der Vorrichtung nach Anspruch 15.

17. Verschluss (1, 2, 5, 6, 7, 8, 9, 10, 12), der zumindest teilweise in eine Mündungsöffnung (16) eines Behälters in eine Verschlussposition eingebringbar ist, wobei der Verschluss (1, 2, 5, 6, 7, 8, 9, 10, 12) in Zusammenwirken mit einer Innenfläche (19) der Mündungsöffnung (16) zumindest teilweise kraftschlüssig in der Mündungsöffnung (16) positionierbar ist und dadurch der Behälterkörper verschließbar ist, wobei der Verschluss (1, 2, 5, 6, 7, 8, 9, 10, 12) weiter ausgebildet ist, aus der Verschlussposition in eine Öffnungsposition ganz außerhalb des Behälterkörpers verbracht zu werden, wobei der Verschluss ein faserhaltiges Material umfasst.

18. System zum Herstellen eines verschlossenen faserhaltigen Behälters, beispielsweise nach einem der Ansprüche 1 bis 12, umfassend eine Vorrichtung zur Herstellung eines Behälters aus faserhaltigem Material, eine Vorrichtung zur Herstellung eines Verschlusses aus faserhaltigem Material, beispielsweise nach Anspruch 17 und eine Vorrichtung zum Verschließen des Behälters, beispielsweise nach Anspruch 15 oder 16, sowie eine Transporteinrichtung zum Transportieren der Behälter und der Verschlüsse an eine Position, an der die Behälter mit den Verschlüssen verschlossen werden.
